# EUROPEAN PATENT APPLICATION

(11) **EP 2 284 655 A2**
(43) Date of publication of application: **16.02.2011**
(21) Application number: 10170833.7
(22) Date of filing: 26.07.2010
(51) Int. Cl.: G06F 3/03, G06F 3/01

(54) **Method and apparatus for controlling electronic device using user interaction**

(30) Priority: 27.07.2009 KR 20090068248
(71) Applicant: Samsung Electronics Co., Ltd., Yeongtong-gu Suwon-si, Gyeonggi-do (KR)
(72) Inventor: Jang, Si Hak, Gyeonggi-do (KR)
(74) Representative: Jenkins, Richard Gavin

(57) **Abstract**

A method and an apparatus for controlling an electronic device according to a user interaction occurring in a space neighboring the electronic device. The method for controlling an electronic device using an input interaction includes: recognizing at least one interaction occurring in a space neighboring the electronic device; and controlling the electronic device corresponding to the at least one interaction.

## Description

### CLAIM OF PRIORITY

This application claims the benefit of priority under 35 U.S.C. §119 from Korean Patent Application No. 10-2009-0068248 filed in the Korean Intellectual Property Office on July 27, 2009, the entire contents of which are incorporated herein by reference.

### BACKGROUND OF THE INVENTION

### Field of the Invention

The present invention relates to a method and a device for controlling an electronic device by a user motion. More particularly, the present invention relates to a method and an apparatus for controlling an electronic device according to a user motion that is sensed by the electronic device.

### Description of the Related Art

In recent years, with the rapid development of communication technology, the functions of an electronic device, particularly a portable electronic device have been gradually extended. Accordingly, various user interfaces and various functions for using them have been provided by manufacturers and service providers. Furthermore, various manners of input data and commands have been provided to control various functions of the electronic device.

In order to control a corresponding electronic device within a general electronic device, namely, to perform various functions typically provided by modules in the corresponding electronic device, control can be made through key inputs with respect to keys included in the electronic device. Otherwise, in the case of an electronic device having a touch screen, such electronic devices can be controlled by a touch input in a specific area of the touch screen. As described above, in the related art, a direct input occurs in a specific input unit with the purpose of controlling the electronic device.

However, as previously discussed, in the general electronic device there are respective functions provided from a corresponding device that are controlled by a simple key input or touch input. Consequently, there is a limitation on a quantity of respective functions of the electronic device that they can be controlled by only the key input or touch input. Moreover, the respective functions have simplicity in that they are controlled in a unique input manner, such as a key input or a touch input. In addition, conventionally, input units for controlling one electronic device cannot combine simultaneous inputs of different types of input devices to support a function outputting corresponding results.

### SUMMARY OF THE INVENTION

The present invention has been made to provide a method and an apparatus for controlling an electronic device using a user interaction.

The present invention also provides a method and an apparatus that may control an electronic device by a user interaction in an adjacent space neighboring the electronic device.

The present invention also provides a method and an apparatus that may control an electronic device by a complex user interaction input from an adjacent space neighboring the electronic device.

The present invention also provides a method and an apparatus that may recognize at least one interaction occurring in an adjacent space neighboring an electronic device to control the electronic device according to the at least one recognized interaction.

The present invention also provides a multi-modal interface that may use various functions provided from an electronic device easily and intuitively.

The present invention also provides a method and an apparatus that may recognize at least one of a plane interaction and a space interaction in a space neighboring an electronic device to control the electronic device simply and intuitively according to the at least one recognized interaction.

In accordance with an exemplary aspect of the present invention, an electronic device using an input interaction includes:
a device for recognizing at least one interaction occurring in a space neighboring with a predetermined distance of the electronic device; and a control unit for controlling the electronic device according to the at least one interaction recognized by the device.
In accordance with another exemplary aspect of the present invention, an electronic device control system includes:
   a first device recognizing a plane interaction according to a user gesture operating on a plane around the electronic device; a second device recognizing a space interaction according to a user gesture operating in a space around the electronic device; and a processing unit that discriminates between a plane interaction or a space interaction, and controls the electronic device corresponding to the discriminated interaction.

### BRIEF DESCRIPTION OF THE DRAWINGS

The following exemplary objects, features and advantages of the presently claimed invention will become more apparent from the following detailed description in conjunction with the accompanying drawings, in which:

FIGS. 1 to 3 are perspective views illustrating examples of an electronic device in accordance with an exemplary embodiment of the present invention, respectively;

FIG. 4 is a perspective view schematically illustrating an electronic device in accordance with an exemplary embodiment of the present invention;

FIG. 5 is a diagram illustrating recognition areas of a recognizing plane and space interactions in an electronic device in accordance with an exemplary embodiment of the present invention;

FIGS. 6 to 8 are schematic diagrams illustrating an operating method of an electronic device in respective recognition areas according to a user gesture in accordance with an exemplary embodiment of the present invention;

FIG. 9 is a flowchart illustrating an exemplary operation of a method for controlling an electronic device using a user interaction in an electronic device in accordance with an exemplary embodiment of the present invention;

FIG. 10 is a flow diagram illustrating an overall operation for controlling an electronic device according to a user interaction in accordance with an exemplary embodiment of the present invention;

FIGS. 11 to 14 are views illustrating exemplary embodiments of an operation processing a function corresponding to a user interaction in an electronic device in accordance with an embodiment of the present invention;

FIGS. 15 and 16 are views illustrating another exemplary embodiment of an operation processing a function corresponding to a user interaction in an electronic device in accordance with an exemplary embodiment of the present invention; and

FIGS. 17 to 20 are views illustrating further exemplary embodiments of an operation processing a function corresponding to a user interaction in an electronic device in accordance with an exemplary embodiment of the present invention.

### DETAILED DESCRIPTION

Hereinafter, exemplary embodiments of the present invention are described in detail with reference to the accompanying drawings. The same reference numbers are used throughout the drawings to refer to the same or like parts. Detailed descriptions of well-known functions and structures incorporated herein may be omitted to avoid obscuring appreciation of the subject matter of the present invention by a person of ordinary skill in the art.

The present invention relates to a method and an apparatus for controlling an electronic device utilizing a user interaction. The electronic device according to an exemplary embodiment of the present invention includes at least one device recognizing at least one interaction occurring in an adjacent space neighboring the electronic device. Further, an exemplary embodiment of the present invention may control functions of the electronic device according to the at least one interaction recognized by the at least one device.

In another exemplary embodiment of the present invention, the electronic device can identify, with a discrimination between them, a plane interaction according to a user gesture occurring on a plane around the electronic device, a space interaction according to a user gesture occurring in a space around the electronic device, and a convergence interaction including both the plane interaction and the space interaction. The electronic device processes and provides a function according to a corresponding interaction.

The present invention preferably senses a user gesture (e.g., hand shape, hand motion, moving direction of a hand, etc.) using a device included in the electronic device, and discriminates the sensed user gesture according to a preset definition to be uses as a meaningful input of the electronic device. Further, an exemplary embodiment of the present invention uses at least one device to sense and discriminate the user gesture, and a discriminated input is defined to be used for a control interaction of the electronic device.

Hereinafter, an electronic device using a user interaction, a method and a device for controlling the electronic device using the user interaction will be described. However, since an electronic device and a control operation thereof according to the present invention are not limited to the following description, it will be recognized that the claimed invention is applicable to various exemplary embodiments based at least in part on the following embodiments.

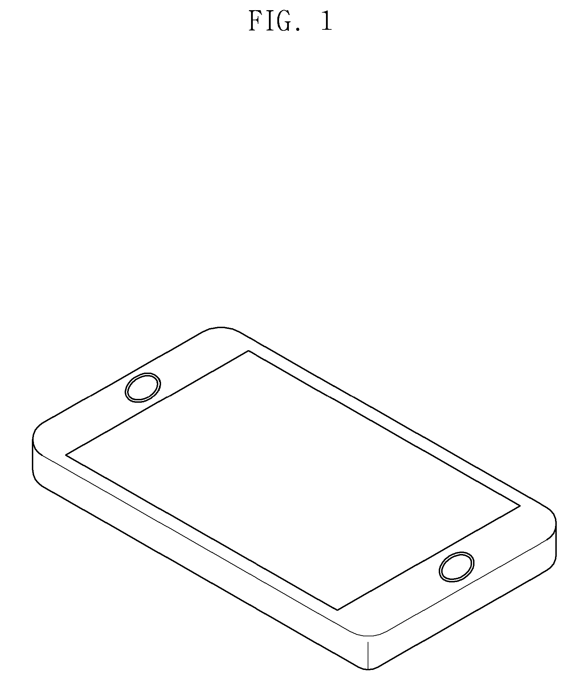

FIGS. 1 to 3 are perspective views illustrating examples of an electronic device in accordance with an exemplary embodiment of the present invention, respectively.

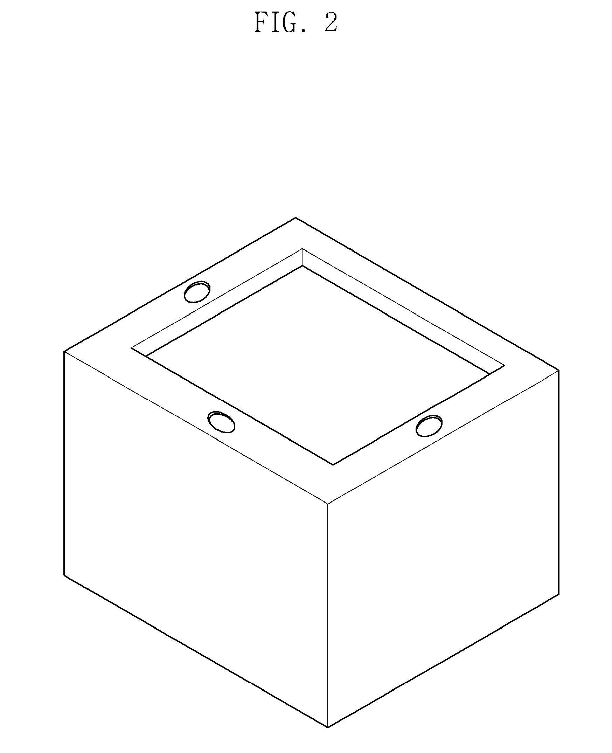

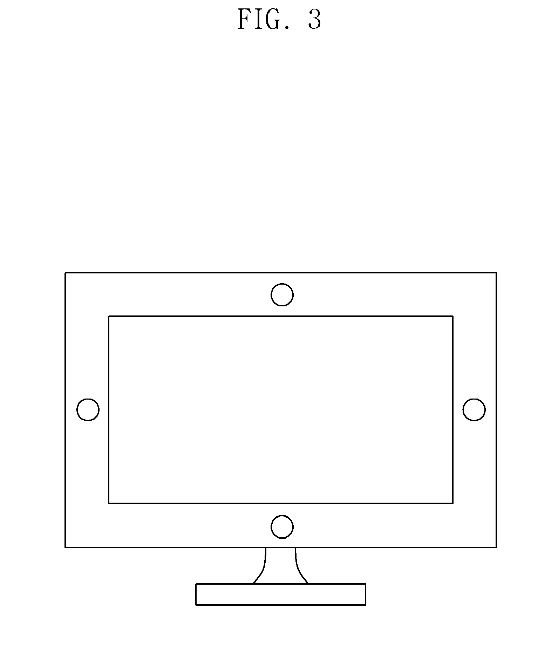

Referring now to FIGS. 1 to 3, FIG. 1 shows an example of a portable terminal that is one of the electronic devices utilized in the present invention. FIG. 2 shows an example of a guide system, which comprises one of the electronic devices utilized in the present invention. FIG. 3 shows an example of a television set which is one of electronic devices used in the present invention.

In this particular case, the portable terminal of FIG. 1 may include all kinds of information and communication devices and multimedia devices, and application devices thereof, including but in no way limited to, for example, a Portable Multimedia Player (PMP), a digital broadcasting player, a Personal Digital Assistant (PDA), a music player (e.g., MP3 player), a portable game terminal and Smart Phone, as well as all kinds of mobile communication terminals operating based on communication protocols corresponding to various communication systems. Meanwhile, the exemplary guide system of FIG. 2 provides various guide information requested from a user in museums, exhibit halls, amusement parks, or streets, and may include a screen monitor and a media pole fixed to a wall, a column, or a ground. Furthermore, the exemplary television of FIG. 3 indicates an example of a large electronic device, and may further include a personal computer, a monitor of the personal computer, a notebook computer, or a monitor of the notebook computer, netbook computer, lap top computer, tablet computer, etc.

Referring now to FIGS. 1 to 3, the electronic device according to an exemplary embodiment of the present invention is a tool for providing an output corresponding to a user's input, and may include all types of middle and largesized devices fixed to a specific space, as well as small devices that a user can carry (portable). Accordingly, hereinafter, although the electronic device in the examples comprises a portable terminal as a representative example, a person of ordinary skill in the art should understand and appreciate that the claimed invention is in no way limited to a portable terminal, and can include all devices in some of the various forms as mentioned above and others.

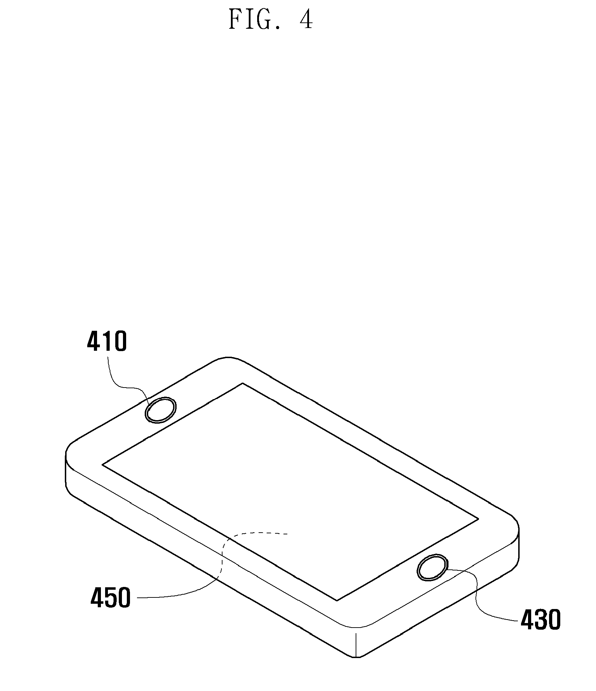

The electronic device according to an exemplary embodiment of the present invention senses at least one user interaction occurring in a space neighboring the electronic device, and processes a function control according the user interaction. To do this, the electronic device of the present invention includes at least one sensing device receiving input of the at least one user interaction. Hereinafter, an example of a configuration of the electronic device with the at least one device will now be explained with reference to FIG. 4.

FIG. 4 is a perspective view illustrating an electronic device in accordance with an exemplary embodiment of the present invention. In particular, although FIG. 4 shows a portable terminal as one particular example of the electronic device capable of using a user interaction, the electronic device of the present is not limited to the portable terminal. Namely, as described above, various small devices and middle and big sized devices can be used, including thin client devices and large displays.

Referring now to FIG. 4, the electronic device of the present invention may include at least one device. For example, the electronic device may include a first sensing device 410, a second sensing device 430, and a third sensing device 450. In the present invention, the respective sensing devices 410, 430, and 450 indicate a sensing unit for recognizing at least one interaction corresponding to a user gesture input from a specific space neighboring the electronic device.

In an exemplary embodiment of the present invention, the respective sensing devices 410, 430, and 450 include all types of recognition means tracking the user gesture and generating a result value according thereto. For example, each of the sensing devices 410, 430, and 450 may include recognition capability such as, for example, a proximity sensor, an infrared sensor, an illumination sensor, a heat sensor, or a camera sensor. In the case shown in FIG. 4, the electronic device is described by way of example only that the first sensing device 410 and the second sensing device 430 are a camera sensor, and the third sensing device 450 is a proximity sensor. Namely, the electronic device of FIG. 4 indicates a portable terminal including devices composed of two camera sensors 410 and 430, and one proximity sensor 450.

Here, the locations of the sensing devices 410, 430, and 450 are not limited to their respective locations shown in FIG. 4. For example, FIG. 4 shows a case in which the first sensing device 410 and the second sensing device 430 being a camera sensor are provided at left and right sides of the electronic devices, and the third sensing device 450 being a proximity sensor is provided inside the electronic device. However, the first sensing device 410, the second sensing device 430, and the third sensing device 450 can be configured in various manners upon manufacturing the electronic device in such a way that the first sensing device 410 and the second sensing device 430 are respectively provided at upper and lower sides of the electronic device, and the third sensing device 450 is disposed adjacent to one or both of the first sensing device 410 and the second sensing device 430.

Further, although the electronic device includes a plurality of different devices in a case of FIG. 4, the presently claimed invention is not limited thereto. Namely, the electronic device of the present invention may be composed of one device. Moreover, the electronic device of the present invention can be configured by the same type of plural devices such as the first sensing device 410 and the second sensing device 430. In the meantime, the electronic device of the present invention can be composed of a combination of different types of devices such as the first sensing device 410, the second sensing device 430, and the third sensing device 450. Structures of such devices can be variously provided according to a form of the electronic device.

For example, the electronic device may constitute a device by one recognition unit such as, for example a proximity sensor, an infrared sensor, an illumination sensor, by a combination of one proximity and one camera sensor, or a combination of one proximity and plural camera sensors.

Hereinafter, as shown in FIG. 4, operation of exemplary embodiments of the present invention will be explained with reference to a portable terminal that includes camera sensors provided at left and right sides of the electronic device and one proximity sensor provided inside the electronic device.

Namely, as shown in FIG. 4, a user gesture (e.g., hand shape, hand gesture, and moving direction of a hand) occurring around the perimeter of the electronic device is recognized using the first sensing device 410 and the second sensing device 430 being a camera sensor, and the third sensing device 450 being a proximity sensor. Further, a user gesture recognized by at least one device is processed as an input interaction for controlling the electronic device.

At this time, in an exemplary embodiment of the present invention, the third sensing device 450 being a proximity sensor checks whether or not a user gesture occurring in a space neighboring the electronic device is in close proximity (proximate state) to the electronic device and provides a reference thereof. Furthermore, the third sensing device 450 is used to check proximate recognition of a human body part (e.g., user's hand, etc.) and to discriminate a region in a space neighboring the electronic device by a predetermined distance. Namely, the third sensing device 450 senses whether or not an object is proximate to a specific distance from the electronic device. In the present invention, the third sensing device 450 senses proximity of a user' hand to discriminate a corresponding function of the electronic device. Namely, the third sensing device 450 generates a control signal for a space interaction according to a user gesture operating in a space neighboring the electronic device.

Further, in an exemplary embodiment of the present invention, the first sensing device 410 and the second sensing device 430 correspond to a camera sensor and sense a user gesture to measure a moving direction, a moving speed, and a gesture shape (hand shape, etc.) of the user gesture. In particular, the first sensing device 410 and the second sensing device 430 control a control signal for a plane interaction according to a user gesture operating in a space neighboring the electronic device.

At this time, in the presently claimed invention, when the space interaction and the plane interaction occur simultaneously according to a user gesture in the first sensing device 410, the second sensing device 430, and the third sensing device 450, the space interaction and the plane interaction are defined as a convergence interaction, which may describe the generation of a control signal according to the convergence interaction. Namely, in an exemplary embodiment of the present invention, in a status where a specific user gesture is sensed in one of the first sensing device 410 and the second sensing device 430, when a user gesture is sensed in the third device 450, interactions according the user gesture are classified by steps, namely, proximate levels to control a corresponding function of the electronic device by the third sensing device 450.

For example, upon recognition of the space interaction by a proximity sensor, the electronic device may control performance of a corresponding function mapped by a user gesture of the space interaction. Upon recognizing the plane interaction by a camera sensor, the electronic device may perform a corresponding function mapped by a user gesture of the plane interaction. Upon recognizing a convergence interaction by the camera sensor and the proximity sensor, the electronic device may control performance of a corresponding function mapped by a user gesture of the convergence interaction. Such examples will be described with reference to drawings and a table according to respective exemplary embodiments.

As described herein above, an overall exemplary arrangement for an operation of the present invention can be configured by a device such as, for example, a proximity sensor, a camera sensor, an infrared sensor, or an illumination sensor for sensing an interaction according to a user gesture; an electronic device including the device; and a processing unit (e.g., control unit or execution application corresponding to each function) processing a function control by using interactions sensed from at least one device as an input. Here, the control unit serves to control the electronic device using an interaction according to an embodiment of the present invention. The execution application includes musical instrument play applications, image view applications, and camera function relation applications to be described herein below. Such applications execute an operation defined according to an interaction provided from at least one device.

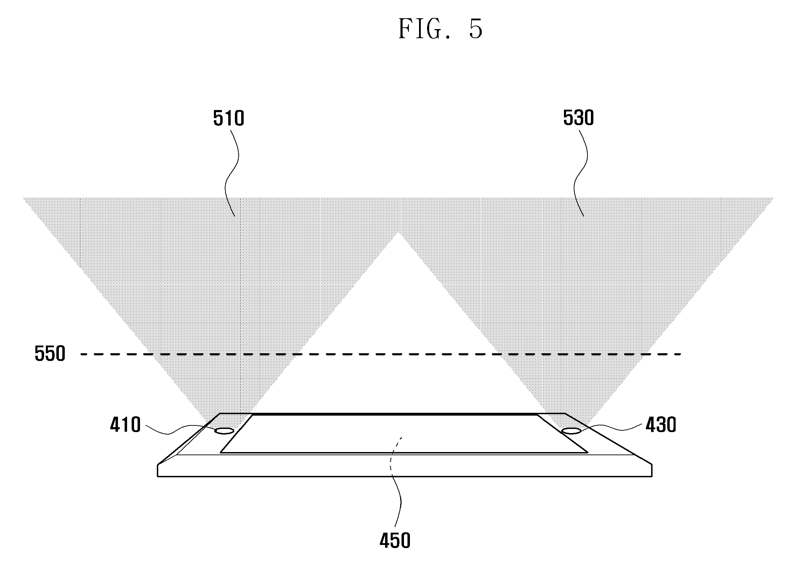

FIG. 5 is a schematic view illustrating recognition areas recognizing plane and space interactions in an electronic device in accordance with an exemplary embodiment of the present invention.

First, a gesture such as a user' hand gesture is sensed by at least one sensing device (410, 430, 450) included in the electronic device according to an exemplary embodiment of the present invention, and the sense gesture is discriminated according to a preset definition to be used as a meaningful input of the electronic device. At this time, in an exemplary embodiment of the present invention, at least one device is used to sense and discriminate the gesture, and the discriminated input is defined for use with control interaction of the electronic device.

Referring now to FIG. 5, a recognition area for interaction recognition in at least one device defined in the present invention can be divided into plane recognition areas 510 and 530 that the first sensing device 410 and the second sensing device 430 recognize as the plane interaction, and a space recognition area 550 that the third device 450 recognizes as the space interaction.

In an exemplary embodiment of the present invention, the plane recognition areas 510 and 530 indicate areas that the first sensing device 410 and the second sensing device 430 sense a user's plane interaction from a space neighboring the electronic device. The space recognition area 550 indicates an area in which the third sensing device 450 senses a user's space interaction from a space neighboring the electronic device. In this case, as shown in FIGS. 4 and 5, the plane recognition areas 510 and 530 can be respectively divided into left and right areas according to respective positions of the first sensing device 410 and the second sensing device 430 in the electronic device, and be disposed to recognize respective gestures according to a user's left and right hands.

At this time, in an exemplary embodiment of the present invention, a user gesture may be recognized in a recognition area of at least one of the first sensing device 410 to the third sensing device 450 to discriminate an interaction with respect to the user gesture. Furthermore, the electronic device can be controlled according to the discriminated interaction.

For example, assuming that a user plays a musical instrument using the electronic device, the user can create an interaction by a gesture input set in the recognition areas 510. Accordingly, the first sensing device 410 and/or the second sensing device 430 recognize a user gesture in the plane recognition area 510 and/or the plane recognition area 530 to generate a plane interaction with respect thereto, thereby processing a corresponding function according to the musical instrument play. Meanwhile, the third sensing device 450 recognizes a gesture entering a downward direction of a limit point (boundary line) of the space recognition area 550 based on the limit point thereof to generate a space interaction striking a musical instrument, thereby processing a corresponding function according to playing the musical instrument. Moreover, a user gesture is recognized in a plane recognition area of the first sensing device 410 and/or the second sensing device 430 and in a space recognition area of the third sensing device 450 to generate a convergence interaction with respect thereto, thereby processing a corresponding function according to playing a musical instrument.

As illustrated previously, in an exemplary embodiment of the present invention, the electronic device can be separately controlled according to interactions provided by at least one device. This separate control according to interactions can be summarized as listed in following Table 1.

**Table 1**

| 1st device | 2^{nd} device | 3^{rd} device | Interaction | Function |
|---|---|---|---|---|
| √ | | | Plane | Execute function defined in gesture measured in plane recognition area |
| | √ | | Plane | Execute function defined in gesture measured in plane recognition area |
| | | √ | Space | Execute function defined in gesture measured in space recognition area |
| √ | | √ | Combination | Execute function defined in gesture measured in plane recognition and space areas |
| | √ | √ | Combination | Execute function defined in gesture measured in plane recognition and space areas |
| √ | √ | √ | Combination | Execute function defined in gesture measured in plane recognition and space areas |

As illustrated in Table 1, when an interaction is sensed in only a plane recognition area 510 of the first device 410, namely, in the plane recognition area 510 among outer sides of the space recognition area 550 of the third device 450 (e.g., upper end of a limit point), a control unit of the electronic device analyzes a user gesture measured in the plane recognition area 510 to control the electronic device according to a function defined previously in a corresponding gesture.

In the meantime, when an interaction is sensed in only a plane recognition area 530 of the second device 430, namely, in the plane recognition area 530 among outer sides of the space recognition area 550 of the third device 450 (e.g., upper end of the limit point), the control unit of the electronic device analyzes a user gesture measured in the plane recognition area 530 to control the electronic device according to a function defined previously in a corresponding gesture.

Furthermore, when an interaction is sensed in only a space recognition area 550 of the third device 450, namely, in areas except for the plane recognition areas 510 and 530 among inner sides of the space recognition area 550 of the third sensing device 450 (e.g., lower end of the limit point), the control unit of the electronic device analyzes a user gesture measured in the space recognition area 550 to control the electronic device according to a function defined previously in a corresponding gesture.

Additionally, when an interaction is sensed in a plane recognition area 510 of the first sensing device 410 and a space recognition area 550 of the third sensing device 450, namely, in an area overlapping with the plane recognition area 510 among inner sides of the space recognition area 550 of the third sensing device 450 (e.g., lower end of the limit point), the control unit of the electronic device analyzes a user gesture measured in an overlapped area between the space recognition area 550 and the plane recognition area 510 to control the electronic device according to a function defined previously in a corresponding gesture.

Moreover, when an interaction is sensed in a plane recognition area 530 of the second sensing device 430 and a space recognition area 550 of the third sensing device 450, namely, in an area overlapping with the plane recognition area 530 among inner sides of the space recognition area 550 of the third sensing device 450 (e.g., lower end of the limit point), the control unit of the electronic device analyzes a user gesture measured in an overlapped area between the space recognition area 550 and the plane recognition area 530 to control the electronic device according to a function defined previously in a corresponding gesture.

In addition, when an interaction is sensed in the plane recognition areas 510 and 530 of the first sensing device 410 and a space recognition area 550 of the third sensing device 450, namely, in respective areas overlapping with the plane recognition area 530 among inner sides of the space recognition area 550 of the third sensing device 450 (e.g., lower end of the limit point), the control unit of the electronic device analyzes a user gesture measured in an overlapped area between the space recognition area 550 and the plane recognition area 510 to control the electronic device according to a function defined previously in a corresponding gesture.

Meanwhile, as mentioned previously, an exemplary embodiment of the present invention classifies interactions into a plane interaction, a space interaction, and a convergence interaction, and controls a corresponding function according to a measured user gesture and information defined with respect to a corresponding gesture. As illustrated previously, an exemplary embodiment of the present invention divides use of a space using a recognition area of at least one device that enables interactions with respect to two or more levels.

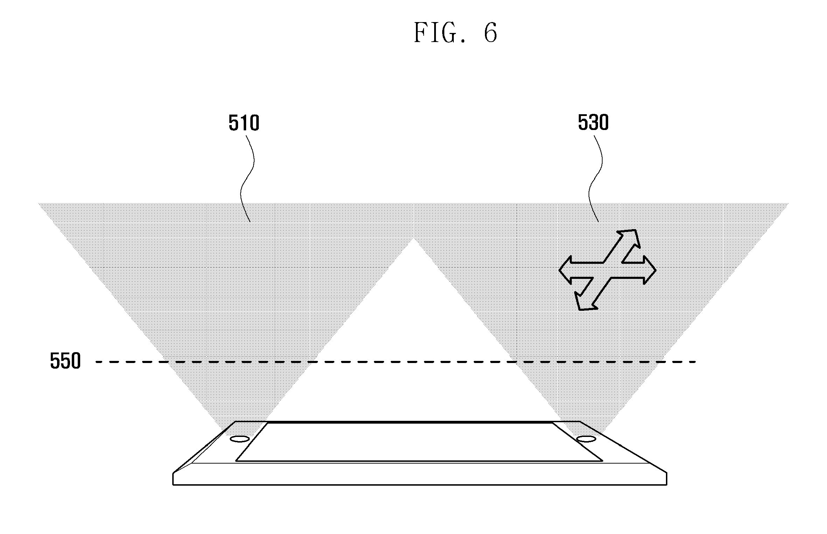

The following is a detailed exemplary embodiment of the present invention with reference to FIGS. 6 to 8.

FIGS. 6 to 8 are schematic view illustrating an operating method of an electronic device in respective recognition areas according to a user gesture in accordance with an exemplary embodiment of the present invention.

Referring now to FIG. 6, which illustrates a case where a user gesture is sensed outside a space recognition area 550, namely, in a non-overlapped area of the third sensing device 450 by the first sensing device 410 and/or the second device 430, and an operation thereof. That is, a user can create a previously defined gesture in a non-overlapped area with the space recognition area 550 from among at least one plane recognition area of the first sensing device 410 and the second sensing device 430. Here, the gesture includes a hand's movement corresponding to up, down, left and right directions based on the electronic device, hand's various shapes, and hand's various gestures. Accordingly, a control unit of the electronic device analyzes a gesture according to an interaction recognized by the first device 410 and/or the second sensing device 430 to control a corresponding mapped function.

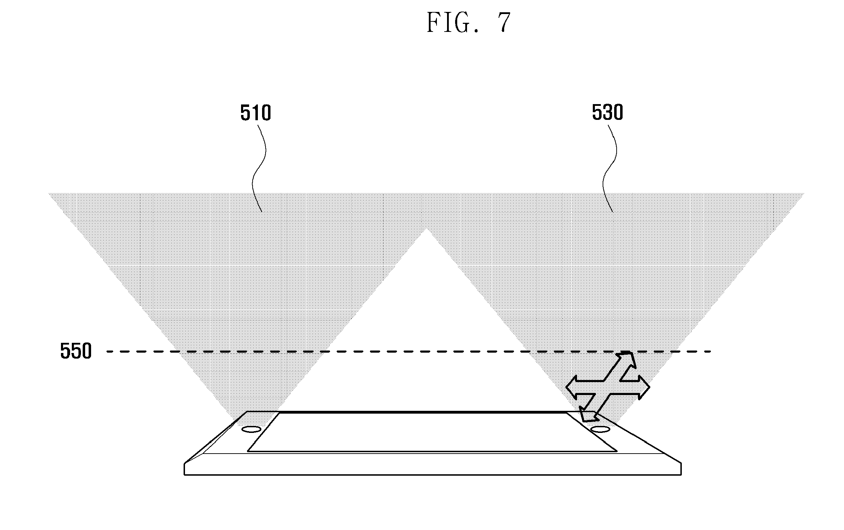

Referring now to FIG. 7, which illustrates a case where a user gesture is sensed inside a space recognition area 550, namely, in an overlapped area of the third sensing device 450 by the first sensing device 410 and/or the second sensing device 430, and an operation thereof. In other words, a user can create a previously defined gesture in an overlapped area with the space recognition area 550 from among at least one plane recognition area of the first sensing device 410 and the second sensing device 430. Here, the gesture includes a hand's movement corresponding to up, down, left and right directions based on the electronic device, hand's various shapes, and hand's various gestures. Accordingly, a control unit of the electronic device analyzes a gesture according to an interaction recognized by the first sensing device 410 and/or the second sensing device 430 and the third device sensing 450 to control a corresponding mapped function.

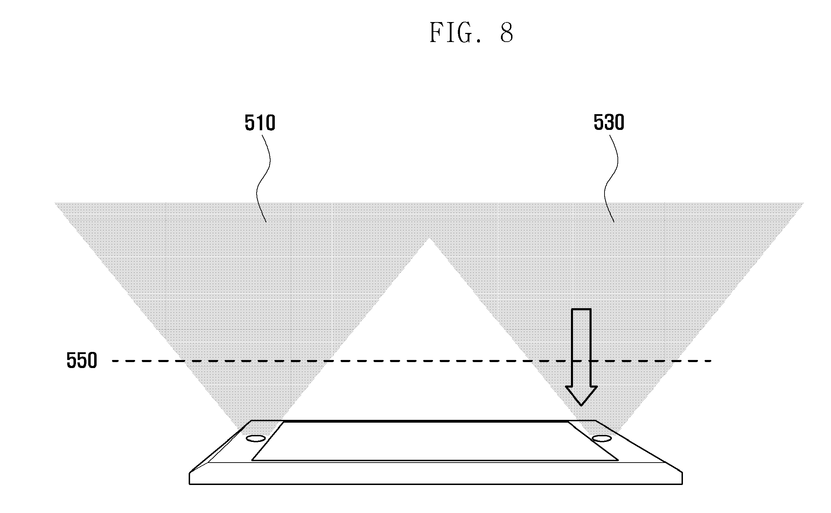

FIG. 8 illustrates a case where a gesture with a recognition area changed to an overlapped area that is sensed across a space recognition area 550, namely, in a non-overlapped area of the third sensing device 450, and an operation thereof. More particularly, a user can produce a previously defined gesture in which an interaction enters an overlapped area in a non-overlapped area with the space recognition area 550 from among at least one plane recognition area of the first device sensing 410 and the second sensing device 430. Here, the gesture includes a hand's movement (e.g., a striking operation) that enters from an upper side to a lower side based on a limit point of the space recognition area 550. Accordingly, the control unit of the electronic device senses an interaction moved to an overlapped area with a recognition area of the third sensing device 450 in recognition areas of the first sensing device 410 and/or the second sensing device 430, and analyzes a gesture according to the interactions, thereby controlling a corresponding mapped function.

An example of execution of a musical instrument playing function will now be described based on the operation of FIG. 8. Striking a musical instrument can be controlled by passing a user interaction from an outside of a limit point of the space recognition area 550 to an inside thereof. At this time, each of the first sensing device 410 and the second sensing device 430 may sense a change of a frame according to entering of a user gesture to recognize striking strength according to a changed size of the frame. Further, a frame change of the first sensing device 410 and/or the second sensing device 430 is analyzed with respect to a gesture entering from an outside of a limit point of the space recognition area 550 to an inside thereof such that it can be checked whether or not a percussion instrument is struck strongly or weakly. Such an operation is equally applied to left and right sides and can be controlled to be used as different sound inputs. An exemplary embodiment of such an operation will now be described with reference to the following drawings.

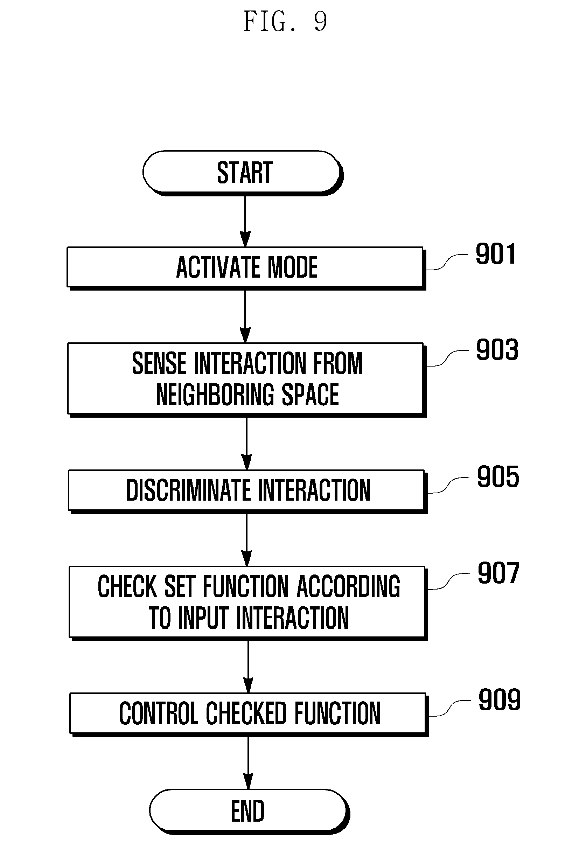

FIG. 9 is a flowchart providing an exemplary illustration of an operation of a method for controlling an electronic device using a user interaction in an electronic device in accordance with an exemplary embodiment of the present invention.

Referring now to FIG. 9, at step (901) a control unit of an electronic device activates a mode for controlling an electronic device using a user interaction in response to a user's request. Here, for example, the mode can be adaptively activated/deactivated according to a user' request, or may be always in an activated state according to the user's request. Accordingly, the mode activation procedure can be omitted from the present invention.

Next, at step (903) the control unit of the electronic device senses an interaction from a space neighboring the electronic device. At this time, as illustrated in the forgoing description with reference to FIGS. 4 to 8, the control unit of the electronic device may receive at least one interaction sensed through at least one device.

Subsequently, at step (905) the control unit of the electronic device discriminates an input interaction. Namely, the control unit of the electronic device checks a recognition area of an interaction recognized through the at least one device. In addition, the control unit checks whether or not the interaction is recognized in a separate recognition area of at least one device or in an overlapped recognition area in at least two devices. Furthermore, the control unit may discriminate a user gesture measured in a corresponding recognition area in which the interaction is recognized.

Next, at step (907) the control unit of the electronic device checks a set function according to the input interaction. More particularly, the control unit checks a function previously defined in a discriminated user gesture according to the input interaction. Further, at step (909) the control unit of the electronic device controls the checked function.

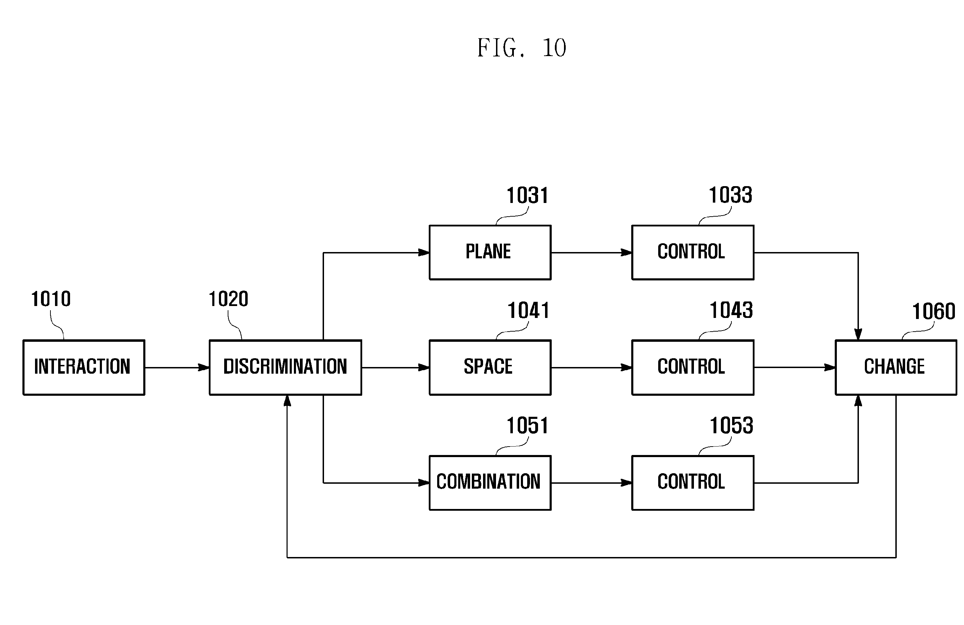

FIG. 10 is a flow diagram illustrating an overall operation controlling an electronic device according to a user interaction in accordance with an exemplary embodiment of the present invention.

Referring now to FIG. 10, at (1010), when a user gesture occurs in a space neighboring the electronic device, a control unit of the electronic device may sense an interaction according to the user gesture from at least one device. Next at 1020, when the interaction is sensed from the at least one device, the control unit of the electronic device processes a procedure of discriminating the interaction of 1010.

In this particular case, the interaction has various forms according to a structure of the electronic device. For example, when the electronic device is configured of only a device such as, for example, a proximity sensor recognizing an interaction in a space, only a space interaction is sensed by the device. Further, when the electronic device is configured of only a device such as, for example, a camera sensor recognizing an interaction on a plane, only a plane interaction is sensed by the device. Meanwhile, when the electronic device is configured by different types of plural devices such as the proximity sensor and the camera sensor capable of separately recognizing the interaction in the space and the interaction on the plane, at least one of the space interaction and the plane interaction is sensed by the devices.

In the meantime, at (1031) when it is discriminated that the interaction is the plane interaction, as mentioned in the description with reference to FIGS. 4 to 9, at (1033) the control unit of the electronic device controls performance of a function according to the plane interaction. In this particular example, the control unit of the electronic device can control performance of a corresponding function by types of the plane interaction. For example, the control unit tracks an interaction set corresponding to each user gesture (hand gesture, hand shape, moving direction, etc.) occurring in a recognition area of the camera sensor, and controls a corresponding function according to the tracked interaction.

With continued reference to FIG. 10, when at (1041) it is discriminated that the interaction is the space interaction, as mentioned in the description with reference to FIGS. 4 to 9, the control unit of the electronic device at (1043) controls performance of a function according to the space interaction. In this particular example, the control unit of the electronic device can control performance of a corresponding function by the types of the space interaction. For example, the control unit tracks an interaction set corresponding to each user gesture (hand gesture, degree of proximity, etc.) occurring in a recognition area of the proximity sensor, and controls performance of a corresponding function according to the tracked interaction.

Next, when at (1051) it is discriminated (from 1020) that the interaction is a convergence interaction (combination), as illustrated in the description with reference to FIGS. 4 to 9, at (1053) the control unit of the electronic device controls performance of a function according to the convergence interaction. Here, the convergence interaction is an interaction when the space interaction and the plane interaction occur simultaneously. Namely, a user gesture occurring at an overlapped area between a recognition area in which the space interaction is sensed, and a recognition area in which the plane interaction is sensed, can be sensed as a combination. This combination is processed as the convergence interaction. At this time, the control unit of the electronic device can control performance of a corresponding function by types of the convergence interactions. For example, the control unit tracks an interaction set corresponding to respective user gestures (hand gesture, degree of proximity, hand shape, moving direction, etc.) occurring in the overlapped area between the recognition areas of the proximity sensor and the camera sensor, and controls a corresponding function according to the interaction.

Meanwhile, when at (1060) a change of the corresponding interaction is sensed during controlling the function according to the plane interaction, the space interaction, and the convergence interaction, namely, when a recognition area or a gesture pattern in which the user gesture is sensed is changed, the control unit of the electronic device may return to step 1020 and perform the foregoing procedures.

Hereinafter, exemplary embodiments of an operation of the present invention and examples of a screen will be described. However, because the exemplary embodiments of the present invention are not limited to the following descriptions, it will be recognized that the present claims may have various substitutions based that fall within the spirit of the invention and the scope of the appended claims.

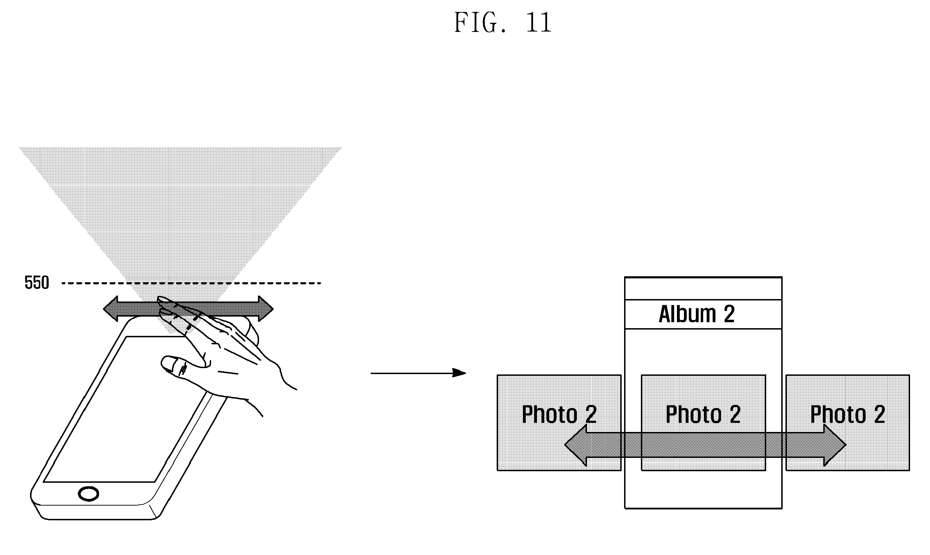

FIGS. 11 to 14 are views illustrating exemplary embodiments of an operation processing a function corresponding to a user interaction in an electronic device in accordance with an exemplary embodiment of the present invention. Here, a following exemplary embodiment is described in that the first device 410 and the second device 430 are camera sensors, and the third device 450 is a proximity sensor.

Referring now to FIGS. 11 to 14, which show examples of an operation controlling performance of a corresponding function set to discriminate an interaction according to a proximate level sensed by a proximity sensor, upon executing a photo album application according to an exemplary embodiment of the present invention. Namely, FIGS. 11 to 14 discriminate an interaction according to a user gesture occurring inside or outside a boundary (i.e. "limit point") of the proximity sensor, and control performance of a corresponding function. Hereinafter, a method for discriminating the interaction according to a proximate level and controlling various functions thereby will be explained with reference to FIGS. 11 to 14.

First, FIG. 11 illustrates a particular example in which a function defined in a user gesture (e.g., hand's left/right motions) is a navigation function when an interaction occurs inside a recognition area of the proximity sensor where optional objects (e.g., images) are presented according to the execution of a photo album application.

With continued reference to FIG. 11, the control unit of the electronic device may recognize a user gesture input from an inside of the recognition area of the proximity sensor, and the user gesture to be moved in one of up, down, left, and right directions in the recognition area of a camera sensor. Accordingly, the control unit combines the interaction from the proximity sensor and the interaction from the camera sensor to determine that the gesture is a convergence interaction. Moreover, the control unit performs a previously defined function in the convergence interaction according to a moving direction of the user gesture, namely, a gesture to be tracked. That is, the control unit processes a navigation function with respect to an object presented corresponding to a moving direction of the gesture.

As described previously, when the convergence interaction occurs by the proximity sensor and the camera sensor, namely, when a gesture is also sensed by the camera sensor in a state that a gesture is sensed by the proximity sensor, the control unit of the electronic device controls performance of a function executing a navigation between objects according to a gesture sensed by the camera sensor during the convergence interaction.

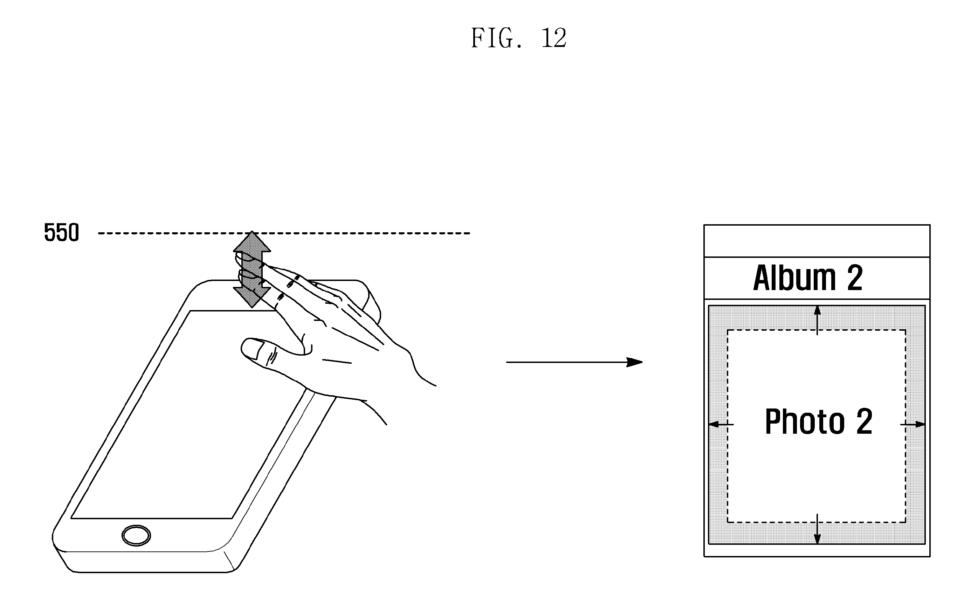

Next, referring to FIG. 12, which illustrates a case that a function defined in a user gesture (e.g., up and down motions of a hand) is extending/shortening functions when an interaction occurs inside the recognition area of the proximity sensor, wherein optional objects (e.g., images) are presented according to the execution of a photo album application.

In FIG. 12, the control unit of the electronic device may recognize a user gesture input from an inside of the recognition area of the proximity sensor, and recognize a change of the user gesture, which approaches or moves away from the electronic device inside the recognition area of the proximity sensor. Accordingly, the control unit determines that the gesture is a space interaction according to a change of a proximate level by the proximity sensor. Next, the control unit performs a previously defined function in the space interaction according to a proximate level of the user gesture, namely, a gesture to be tracked. In addition, the control unit processes extending/shortening functions with respect to objects presented corresponding to the degree of proximity of the gesture to the electronic device. At this time, when the gesture is separated from a recognition area (limit point) of the proximity sensor, the control unit may perform an operation restoring the objects to a set basic size according to a set manner.

As illustrated previously, when a gesture is sensed by the proximity sensor or a gesture is also sensed by the camera sensor in a status in which the gesture is sensed by the proximity sensor, the control unit of the electronic device controls performance of a function extending/shortening the objects according to the gesture sensed by the proximity sensor.

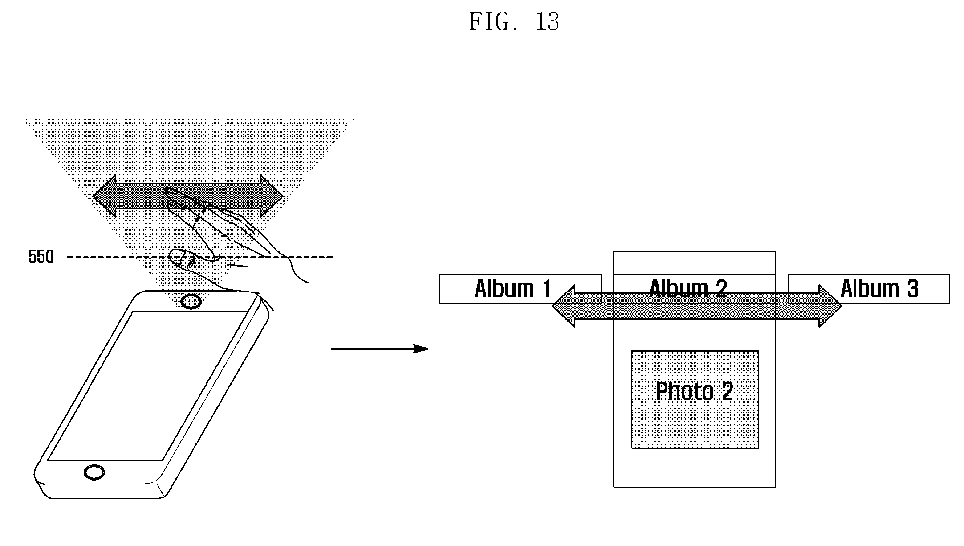

Subsequently, referring now to FIG. 13 shows a case that a function defined in a user gesture (e.g., up and down motions of a hand) that is a category navigation function when an interaction occurs outside the recognition area of the proximity sensor where optional objects (e.g., images) are presented according to the execution of a photo album application. As shown in FIG. 13, an interaction with respect to a user gesture input from an outside of the recognition area of the proximity sensor does not occur by the proximity sensor. Namely, the user gesture is sensed at only the recognition area of the camera sensor to generate an interaction according thereto. In this case, when the control unit of the electronic device recognizes a gesture moving in one of up, down, left, and right directions in the recognition area of the camera sensor, it determines the interaction by the camera sensor is a plane interaction, and controls a function (e.g., category navigation function) mapped in a moving direction of the user gesture, namely, a gesture to be tracked. In particular, the control unit processes a navigation function with respect to categories presented corresponding to the moving direction of the gesture.

Accordingly, when the plane interaction occurs by the camera sensor, the control unit controls a function executing navigation between categories according to the plane interaction. At this time, content (e.g., images) included in a corresponding category may be simultaneously changed to be provided according to a change of the category.

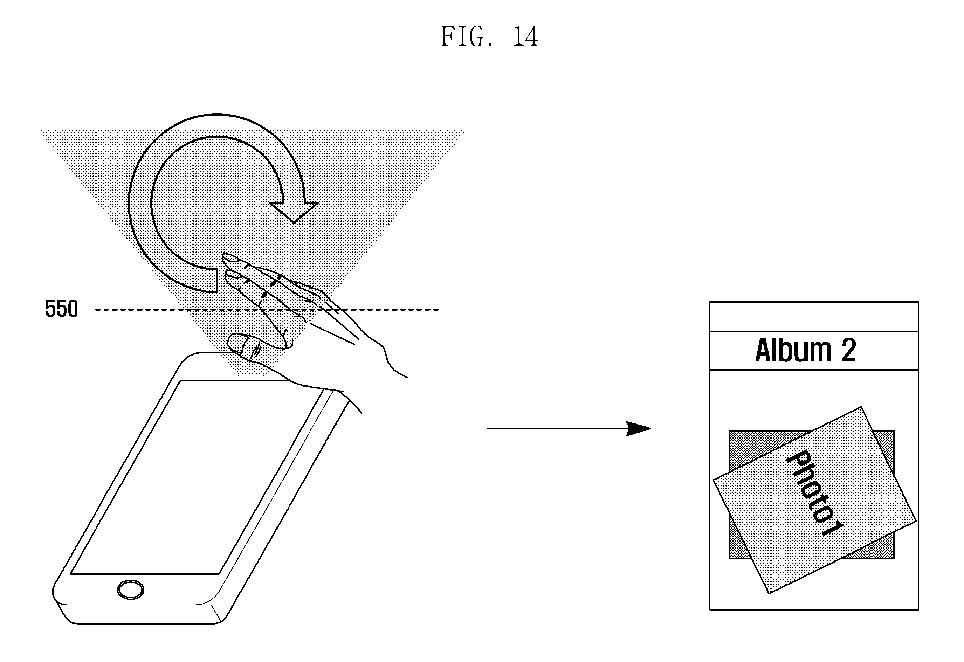

Then, referring to FIG. 14, which shows a case where a function defined in a user gesture (e.g., rotation of a hand) is an object rotating function, when an interaction occurs outside the recognition area of the proximity sensor where optional objects (e.g., images) are presented according to execution of an album application.

FIG. 14 shows an interaction with respect to a user gesture input from an outside of the recognition area of the proximity sensor does not occur by the proximity sensor. For example, the user gesture is sensed in only the recognition area of the camera sensor to generate a corresponding interaction. In this particular case, when the control unit of the electronic device recognizes a gesture rotating clockwise or counterclockwise in the recognition area of the camera sensor, it determines the interaction by the camera sensor is a plane interaction, and controls a function (e.g., object rotation function) mapped in a moving direction of the user gesture, namely, a gesture to be tracked. Namely, the control unit processes a rotation function with respect to objects presented corresponding to the rotating direction of the gesture.

Accordingly, when the plane interaction occurs by the camera sensor, the control unit controls a function rotating objects according to the plane interaction. At this time, the control unit can adaptively reflect and provide an effect rotating the object to a corresponding direction according to clockwise or counterclockwise rotation of the gesture.

As illustrated above, in an exemplary embodiment of the present invention, an area in a space according to an approaching can be determined using the proximity sensor. Further, various operations are possible according to a user's definition in such a way that a moving direction of the gesture is recognized inside a proximate area by a camera sensor to be used as a corresponding interaction and gesture shape/operation is recognized outside the proximity sensor by the camera sensor to be used as a corresponding interaction.

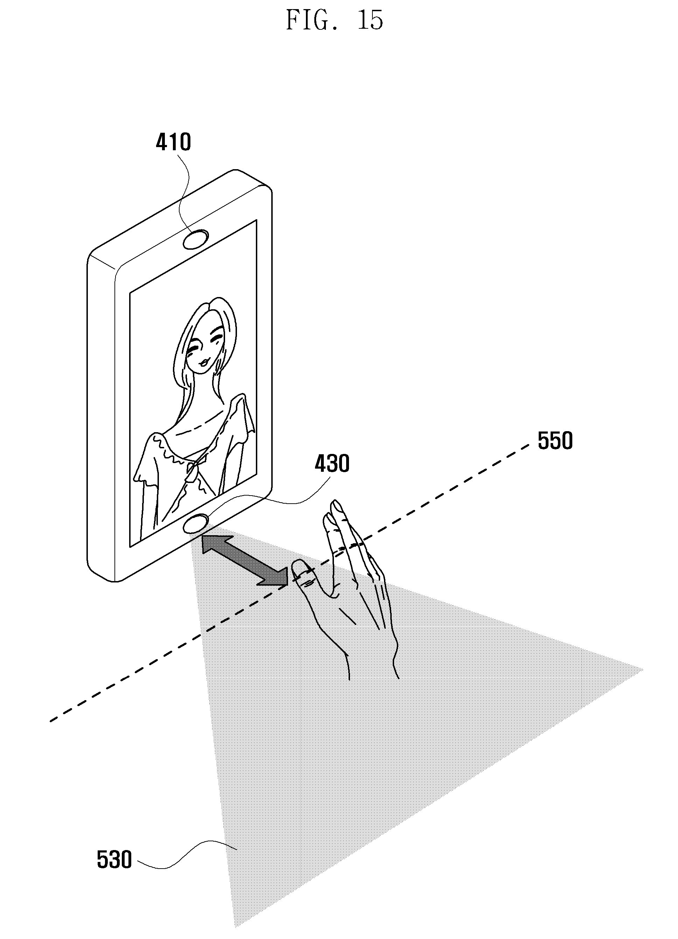

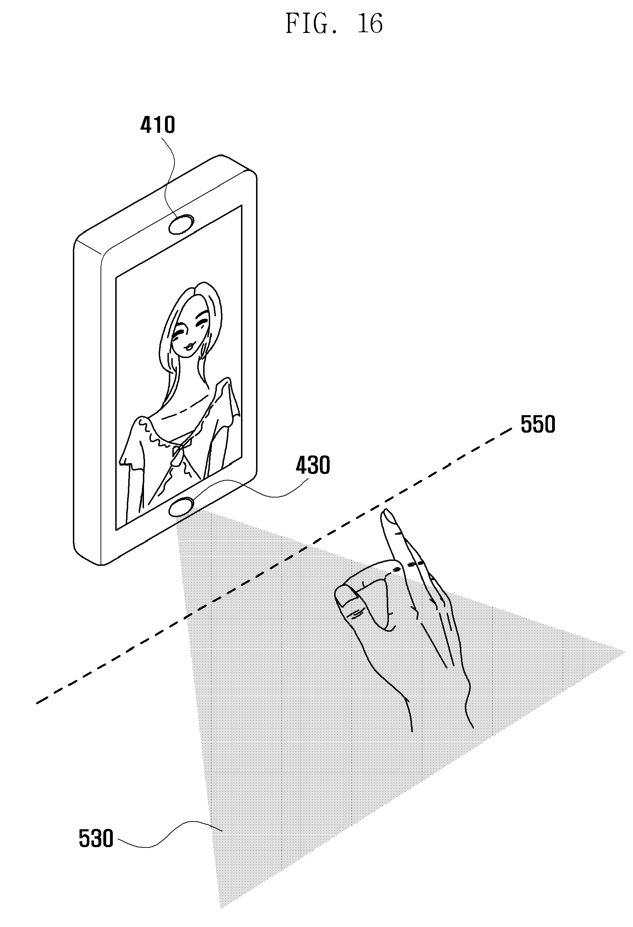

FIGS. 15 and 16 are views illustrating another exemplary embodiment of an operation processing a function corresponding to a user interaction in an electronic device in accordance with an exemplary embodiment of the present invention. In this particular case, the following will be described that the first device 410 and the second device 430 comprise camera sensors, the third device 450 comprises a proximity sensor, the camera sensor being the first device 410 that performs a fundamental function of a camera, and the camera sensor being the second device 430 that operates as a function for a user interaction in the present invention. Further, the functions of the first device 410 and the second device 430 can be used to exchange with each other.

FIGS. 15 and 16 show cases of an operation controlling a function for discriminating an interaction according to a proximate level sensed by the proximity sensor. In particular, FIGS. 15 and 16 show operations of the electronic device in cases of executing a self photographing function among functions using a camera. The operations of FIGS. 15 and 16 would also be equally applicable to the time of a video call.

FIGS. 15 and 16 illustrate examples of operations that discriminate an interaction according to a user gesture occurring inside or outside a recognition area (i.e. "limit point") of a proximity sensor, and control a function related to a self photographing according to a user gesture corresponding to each interaction, respectively. FIGS. 15 and 16 also indicate examples of operations that discriminate an interaction sensed by a proximity sensor and remaining other camera sensors upon execution of a self- photographing application and control a set self photographing function, respectively.

First, FIG. 15 illustrates a case that an interaction according to a user gesture occurs inside a recognition area 550 of the proximity sensor during execution of the self-photographing function. As shown in FIG. 15, the control unit of the electronic device may recognize a user gesture input from an inside of the recognition area 550 of the proximity sensor, and recognize the user gesture to be changed, namely, the user gesture to be proximate or spaced to or from the electronic device inside the recognition area 550 of the proximity sensor. Accordingly, the control unit determines that the gesture is an interaction according to a change in a proximate level by the proximity sensor. Further, the control unit performs a previous defined function in the interaction according to a proximity level of the user gesture, namely, a gesture to be tracked. For example, the control unit processes zoom-in/zoom-out functions of a subject according to self photographing corresponding to degree of proximity of the gesture to the electronic device.

As illustrated above, when a gesture is sensed by the proximity sensor or a gesture is also sensed by the camera sensor in a state that the gesture is sensed by the proximity sensor, the control unit of the electronic device controls zoom-in/zoom-out functions according to self-photographing according to the gesture sensed by the proximity sensor.

FIG. 15 shows that when a user interaction occurs by the camera sensor and the user interaction occurs by the proximity sensor, or the user interaction occurs by only the proximity sensor, the control unit can control zoom-in/zoom-out functions of the self-photographing according to a proximate level of the user interaction by the proximity sensor. At this time, the control unit processes the zoom-in/zoom-out functions according to a proximate level occurring inside the recognition area of the proximity sensor namely, a recognition rate. As shown in FIG. 15, when a user' hand is proximate to a direction of the electronic device from a limit point of the recognition area 550 of the proximity sensor, the control unit may process the zoom-in function. Conversely, when the user's hand is spaced apart from the limit point of the recognition area 550 of the proximity sensor in the electronic device, the control unit may process the zoom-in function.

Then, FIG. 16 shows a case where an interaction according to a user gesture occurs outside the recognition area 550 of the proximity sensor during the execution of a self photographing function. As shown in FIG. 16, the user gesture is sensed in only the recognition area 550 of the camera sensor to generate a corresponding interaction. In this case, when the control unit of the electronic device recognizes a gesture occurring in a recognition area 550 of the camera sensor, it performs a function mapped according to a form of the user gesture, namely, a gesture to be tracked in the interaction by the camera sensor. For example, when the gesture has a hand shape corresponding to "OK", the control unit processes a photograph function according to a self photograph corresponding to the hand shape.

In FIG. 16, when a user gesture occurs by the camera sensor, the control unit may process various additional functions according to a self-photograph corresponding to a form of a gesture tracked by the camera sensor.

Meanwhile, a function control between the camera sensor and the proximity sensor in the self-photograph and the like is not always limited to the foregoing exemplary embodiments. For example, function control information between a user gesture and a device may depend on a user's set. The exemplary embodiment may be as illustrated in Table 2.

**Table 2**

| Proximity Sensor | Camera Sensor | Interaction | Function |
|---|---|---|---|
| √ | √ | Forward and back movements in recognition area | Zoom-in/out |
| √ | √ | Forward and back movements in recognition area | Zoom-in/out |
| | √ | Left and right movements | Zoom-in/out |
| | √ | Hand shape | Change photograph mode |
| √ | √ | Hand shape | Change photograph mode |
| √ | √ | (Reverse) Circle rotation | Change horizontal/vertical |
| | √ | (Reverse) Circle rotation | Change horizontal/vertical |
| ... | ... | ... | ... |

As illustrated in Table 2, in an exemplary embodiment of the present invention, a user can set interactions, gestures, and functions corresponding thereto.

For example, with respect to the same zoom-in/zoom-out functions, a convergence interaction is sensed by the proximity sensor and the camera sensor, a plane interaction or a space interaction is sensed by any one device, and a gesture for generating an interaction may be set by a user's request. Furthermore, a gesture for generating an interaction can be set whether the same gesture and a function according thereto are performed by a space interaction or a plane interaction according to a user's convenience.

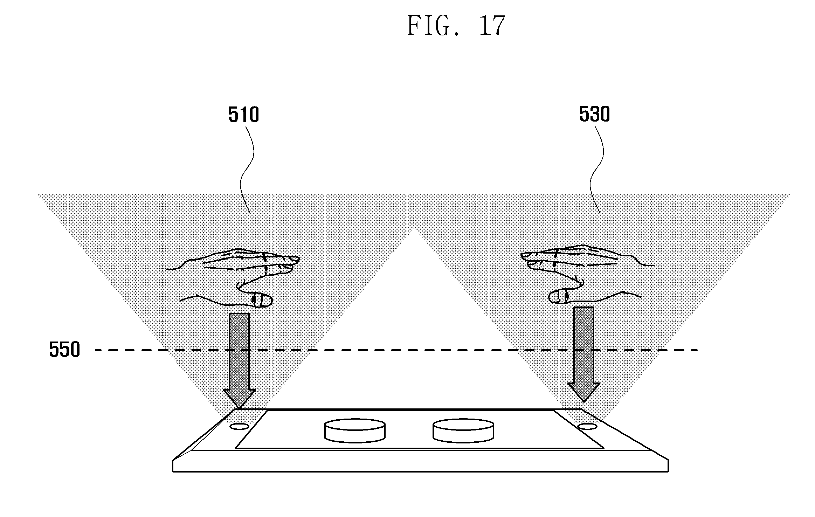

FIGS. 17 to 20 are views illustrating further exemplary embodiments of an operation processing a function corresponding to a user interaction in an electronic device in accordance with an exemplary embodiment of the present invention. At this time, the following has been described that the first device 410 and the second device 430 comprise camera sensors, and the third device 450 comprises a proximity sensor.

In this case, each of electronic devices shown in FIGS. 17 to 20 is a device discriminating a user interaction, and includes two cameras at a plane side thereof and a proximity sensor inside or at one side thereof. Such an arrangement is an example of various electronic devices. An electronic device according to the presently claimed invention is not limited to a structure shown in each of FIGS. 17 to 20.

First, now referring to FIG. 17, an example of an operation that a user input a gesture during the execution of a musical instrument play application in an electric device. As shown in FIG. 17, a user's left and right hands can be located at respective recognition areas of the two camera sensors 410 and 430. At this time, each of the two cameras 410 and 430 continues to sense left and right gestures, respectively.

Further, a recognition area (i.e. "limit point") of the proximity sensor 450 is regarded as a virtual surface of a percussion instrument, and it can be defined that the percussion instrument is struck when an input entering from an outside of the recognition area (limit point) to an inside thereof is sensed. Moreover, each of the camera sensors 410 and 430 may sense a moving speed of a user gesture, which can be defined as an intensity of force playing a musical instrument.

As an example, as shown in FIG. 17, assuming that a musical instrument play application is executed in the electronic device, two camera sensors 410 and 430, and a proximity sensor 450 are used to play a musical instrument through gestures of left and right hands. Further, the speed of a hand gesture can be measured by tracking a frame change sensed in the two camera sensors 410 and 430.

Meanwhile, although a case of using two camera sensors 410 and 430 is illustrated in FIG. 17, a plurality of camera sensors greater than 2 may be provided. When respective recognition areas are discriminated, the camera sensors may receive a plurality of inputs.

Hereinafter, an operation executing a musical instrument play function in an electronic device using a user interaction according to an exemplary embodiment of the present invention will be explained.

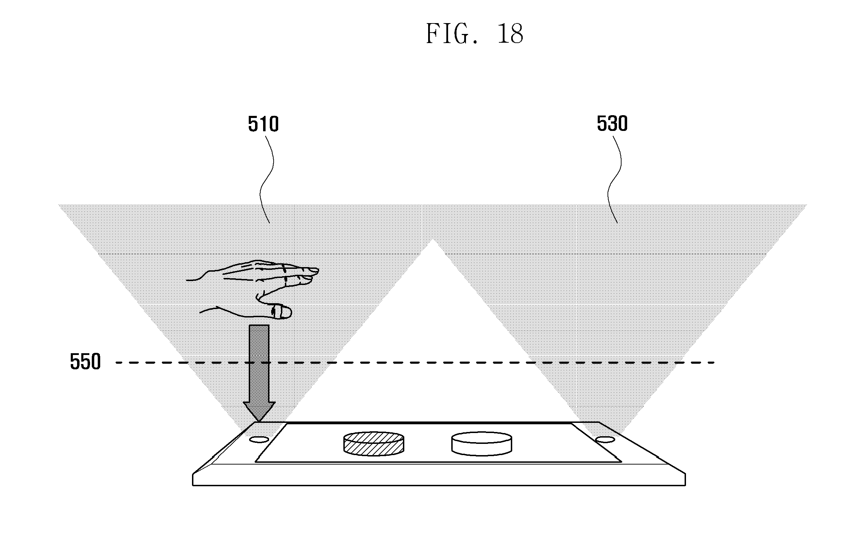

Referring to FIGS. 18 to 20, the electronic device may firstly display a user interface (UI) corresponding to a musical instrument play application on a screen. The UI may be a Graphical User Interface (GUI) corresponding to a form of a real musical instrument or a GUI simplifying a form of the real musical instrument. FIGS. 18 to 20 show GUIs obtained by simplifying a form of a musical instrument corresponding to a user's request, respectively. For example, when a user selects a drum among percussion instruments, each of FIGS. 18 to 20 shows a corresponding GUI of a drum.

As shown in FIG. 18, when a user strikes a musical instrument, the electronic device recognizes only an operation of entering an inside of a recognition area by a proximity sensor to process an interaction. At this time, each of the camera sensors 410 and 430 may sense a change of a frame and process an interaction according to the change of the frame. Namely, a strength of movement according to the user gesture can be discriminated. The camera sensors 410 and 430 analyze the change of the frame with respect to a motion of a gesture entering an inside of the recognition area of the proximity sensor 450 from an outside thereof and check whether or not a user strikes a percussion instrument strongly or weakly based on the analyzed result. Such an operation is equally applied to left and right directions, and can be respectively used as different sound inputs.

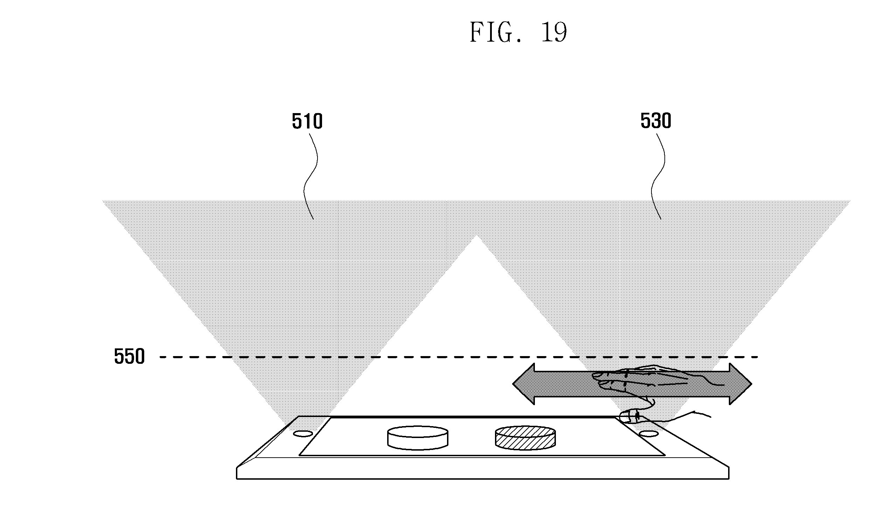

Next, as shown in FIG. 19, a repeated weak input in playing a musical instrument is defined as a wave gesture inside the recognition area of the proximity sensor 450. When an interaction such as the wave gesture occurs in an overlapped recognition area between the proximity sensor and the camera sensor, it can be processed as a continuous weak input in playing the musical instrument.

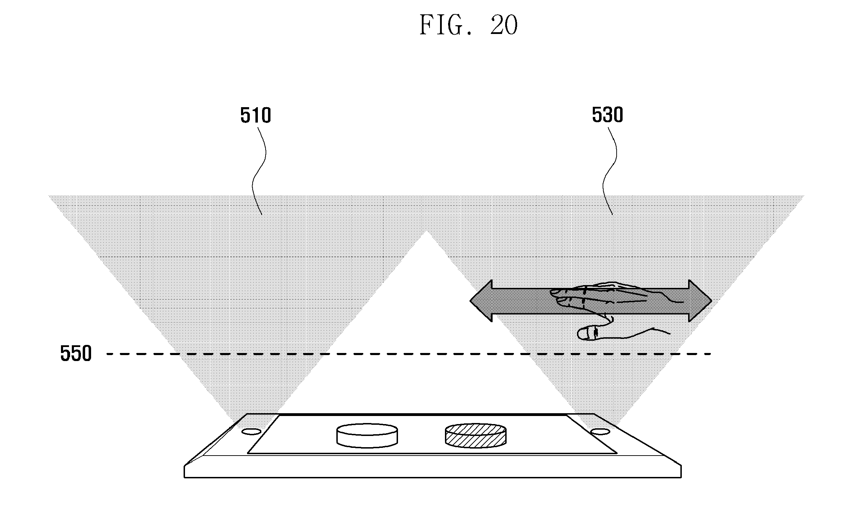

Subsequently, referring to FIG. 20, the musical instrument may continue sounding because of characteristics thereof. Accordingly, an interaction muting a current sound can be defined. In FIG. 20, an input controlling a mute function is defined as a wave gesture occurring outside the recognition area of the proximity sensor 450. When an interaction occurs by the camera sensors 410 and 430 outside the recognition area of the proximity sensor 450, it can be processed as a mute input in a musical instrument play function. Such an operation can mute one or both of left and right sides in which a user interaction occurs.

As described above, in an exemplary embodiment of the present invention, an electronic device according to a user interaction can be controlled using at least one device. For example, a camera sensor may continue to sense a gesture of a user's hands and use a corresponding gesture as each interaction. Further, a proximity sensor may define a proximate area and uses it to discriminate a space area.

According to the present invention as described above, a combination of two sensors may preferably utilize a concept of a space (proximate level) to provide extended interactions in comparison with an interaction manner using a single sensor.

As is seen from the forgoing description, in the method and device for controlling an electronic device using a user interaction according to the present invention, the electronic device of the present invention includes at least one device recognizing at least one user interaction from a space neighboring the electronic device. A user can control the electronic device simply and intuitively by only a user gesture set in a space neighboring the electronic device. The present invention may define an execution function with respect to at least one user interaction recognized by the at least one device according to a user's setting, and variously control the electronic device according to an input user interaction.

Further, the present invention is not limited to a uniquely limited input unit and input manner to control the electronic device. In addition, the present invention can intuitively control the electronic device to give a sense of reality according to a user gesture using different types of plural devices. The present invention may recognize a user gesture operating in a space neighboring the electronic device using different types of plural devices and control the electronic device by the interaction according to the user gesture. As a result, the control of the electronic device may improve a user's convenience and accessibility.

In addition, in an exemplary embodiment of the present invention, upon executing a play function using the electronic device, a musical instrument may be played according to an interaction by a user gesture in a space neighboring the electronic device. Accordingly, musical instruments can be intuitively played to give a sense of reality suited to features of various musical instrument objects (drums, guitars, trumpets, etc.). As mentioned above, the present invention may provide variety with respect to a user's electronic device control input in that an electronic device is controlled in input manners other than key input or touch input of a screen. As a result, in the present invention, a user can control the electronic device in various and complex manners through various inputs. As described above, the present invention improves a uniquely limited control manner of the electronic device, and accordingly it can provide enhanced reality and convenience to a user when the user uses the electronic device.

The above-described methods according to the present invention can be realized in hardware or as software or computer code that can be stored in a recording medium such as a CD ROM, an RAM, a floppy disk, a hard disk, or a magneto-optical disk or downloaded over a network, so that the methods described herein can be rendered in such software using a general purpose computer, or a special processor or in programmable or dedicated hardware, such as an ASIC or FPGA. As would be understood in the art, the computer, the processor or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

Although exemplary embodiments of the present invention have been described in detail hereinabove, it should be clearly understood that many variations and modifications of the basic inventive concepts herein described, which may appear to those skilled in the art, will still fall within the spirit of the invention and the scope of the present invention as defined in the appended claims.

## Claims

1. An electronic device using an input interaction, comprising:
a device for recognizing at least one interaction occurring in a space neighboring the electronic device; and
a control unit (1020, 1033, 1043, 1053) for controlling performance of a function by the electronic device according to the at least one interaction recognized by the device.

2. The electronic device of claim 1, wherein the device includes:
a first sensing device (410, 430) recognizing a plane interaction according to a user gesture occurring on a plane around the electronic device; and
a second sensing device (450) recognizing a space interaction (550) according to a user gesture occurring in a space around the electronic device.

3. The electronic device of claim 2, wherein the first sensing device (410,430) and the second sensing device (450) have a same sensing type configuration or different sensing type configurations.

4. The electronic device of claim 2, wherein the device includes a recognition area in which an interaction is recognized according to a user gesture, and the recognition area is divided into a plurality of areas corresponding to a structure of the device, and an overlapped region is formed between the divided areas.

5. The electronic device of claim 4, wherein the device provides information corresponding to the plane (510, 530, 1031) and space (550, 1041) interactions from the recognition area of the overlapped region and information corresponding to a plane or space interaction from a separate recognition area except for the overlapped region.

6. The electronic device of claim 5, wherein the control unit discriminates between one of a plane interaction (510, 530, 1031) and a space interaction (550, 1041) according to the information, and controls a performance of the electronic device corresponding to the discriminated interaction.

7. An electronic device control system, comprising:
a first sensing device (410, 430)_ recognizing a plane interaction according to a user gesture occurring on a plane around the electronic device;
a second sensing device (450) recognizing a space interaction according to a user gesture occurring in a space around the electronic device; and
a processing means (1020) for discriminating a plane interaction or a space interaction, and controlling the electronic device corresponding to the discriminated interaction.

8. The electronic device of claim 7, wherein the first sensing (410, 430) device and the second sensing device (450) are configured by the same type or different types.

9. The electronic device of claim 8, wherein the first sensing device (410, 430) has a recognition area for the plane interaction, the second sensing device (450) has a recognition area for the space interaction, and the recognition areas of the first and second sensing devices has an overlapped area.

10. A method for controlling an electronic device using an input interaction, comprising:
recognizing at least one interaction occurring in a space neighboring the electronic device; and
controlling the electronic device performing a function corresponding to the at least one interaction.

11. The method of claim 10, wherein recognizing of at least one interaction comprises:
sensing a user gesture from a space neighboring the electronic device; and
recognizing at least one interaction corresponding to the user gesture.

12. The method of claim 11, further comprising:
discriminating the at least one recognized interaction; and
discriminating a control function for controlling performance of a function corresponding to the at least one discriminated interaction.

13. The method of claim 12, wherein the recognition area is divided into a recognition area for the plane interaction (510, 530) and a recognition area for the space interaction (550), and the recognition area includes an overlapped region between the recognition area for the plane interaction and the recognition area for the space interaction.

14. The method of claim 12, wherein controlling of the electronic device comprises discriminating one of the plane interaction and the space interaction, and controls the electronic device to perform a function corresponding to the discriminated interaction.

15. The method of claim 12, wherein controlling of the electronic device comprises controlling the electronic device to perform a function corresponding to the plane interaction and the space interaction when the plane interaction and the space interaction simultaneously occur.
